# EUROPEAN PATENT APPLICATION

(11) **EP 1 103 962 A2**
(43) Date of publication of application: **30.05.2001**
(21) Application number: 00125686.6
(22) Date of filing: 23.11.2000
(51) Int. Cl.: G11B 7/24

(54) **Optical recording medium having an organic recording layer**

(30) Priority: 26.11.1999 JP 33548899
(71) Applicant: SONY CORPORATION, Tokyo (JP)
(72) Inventor: Sabi, Yuichi, Sony Corporation, Tokyo (JP); Watanabe, Hidetoshi, Sony Corporation, Tokyo (JP); Kurokawa, Kotaro, Sony Corporation, Tokyo (JP); Yamamoto, Masanobu, Sony Corporation, Tokyo (JP)
(74) Representative: MÜLLER & HOFFMANN Patentanwälte

(57) **Abstract**

The present invention provides an optical recording medium including a recording layer (4) containing an organic material as a recording material and a dielectric layer (5) arranged so as to cover at least one main surface of the recording layer (4). With this configuration, the organic material will not be dissolved into an adjacent layer and it is possible to perform an accurate recording/reproducing.

## Description

### Background of the Invention

### Field of the Invention

The present invention relates to an optical recording medium including a recording film containing an organic material as a recording material.

### Description of the Prior Art

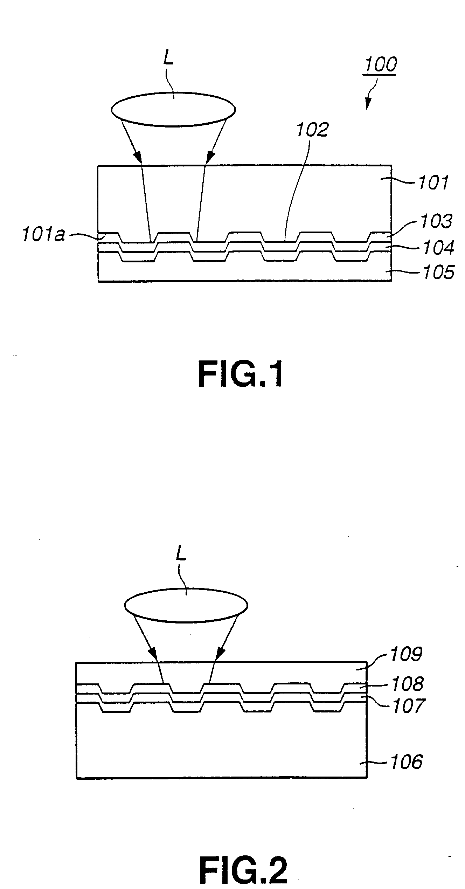

Conventionally, a write-once optical disc 100 as shown in Fig. 1 is known as one of an optical recording medium in which recording can be performed. This write-once optical disc 100 has a thickness of 1.2 mm and includes a signal recording block formed to have a guide groove 102 on one surface 101a of a light transmitting layer 101 which a laser beam can transmit during recording and reproducing, an information recording layer 103, a reflection film 104, and a protection film 105 which are successively layered above the signal recording block.

The light transmitting layer 101 is formed as follows. Firstly, a stamper created in a mastering step is attached into a cavity of an injection molding apparatus. Next, a resin such as polycarbonate in a heated molten state is poured into the cavity and this resin is compression-molded to obtain the light emitting layer 101. That is, in this write-once optical disc 100, the light transmitting layer 101 is formed as a substrate having a guide groove 102 prepared by transfer of convex and concave formed on the stamper.

The write-once optical disc 100 is prepared as follows. An organic pigment material as the information recording layer 103 is layered on the surface having the guide groove 102 of the light transmitting layer 101 prepared as has been described above. Furthermore, the reflection film 104 is formed by the vacuum sputter method as coated with a metal material such as gold and silver because the information recording layer 103 has no sufficient reflectance. Moreover, in order to prevent deterioration of the information recording layer 103 and the reflection film 104, the protection film 105 is formed so as to cover the reflection film 104.

Here, the information recording layer 103 is formed by the spin coat method using a paint prepared by an organic pigment material dissolved in an alcohol solvent such as tetrafluoropropanol and hydroxymethyl butane.

In the write-once optical disc 100 thus prepared performs, a signal recording and reproducing are performed using an optical pickup unit of a recording/reproducing apparatus. Here, the optical pickup unit applies a laser beam of a predetermined wavelength via an objective lens L from the side of the light transmitting layer 101 to the information recording layer 103. Thus, in the write-once optical disc 100, an information signal can be recorded and reproduced.

In recording/reproducing, a laser-focused spot should be formed accurately at a predetermined position. The light transmitting layer 101 serving as a substrate is deformed by stress, heat, and humidity, and the coma aberration of the laser beam is increased depending on the substrate inclination called skew. On the contrary, when the substrate skew is assumed to be constant, it is possible to form a spot of less coma aberration when the substrate has a smaller thickness.

By the way, recently, a higher density is attempted by reducing the laser beam spot diameter by increasing the numerical aperture NA of the objective lens L in the optical pickup unit and by reducing the recording track interval (track pitch) formed in the information recording layer 103. More specifically, there is a tendency to use an object lens L having NA not less than 0.78.

However, when such an object lens L having NA not less than 0.78 is used, in the write-once optical disc 100 including the aforementioned optical transmitting layer 101 having a thickness of 1.2 mm, the spot aberration for a predetermined skew and an accompanying reproduction signal deterioration become remarkable. Accordingly, it has been difficult to produce a write-once optical disc 100 using as a substrate the light transmitting layer 101 having a thickness of 1.2 mm.

In order to solve this problem, as shown in Fig. 2, there has been developed a write-once optical disc including a substrate 106, a reflection layer 107 formed on the substrate 106, an information recording layer 108 formed on the reflection layer 107, and a light transmitting layer 109 formed on the information recording layer 108. In the write-once optical disc shown in Fig. 2, the light transmitting layer 109 can have a reduced thickness and it is possible to perform recording/reproducing using an optical pickup unit using an objective lens 110 having NA not less than 0.78. More specifically, when the objective lens 110 having NA not less than 0.78 is used, it has been suggested that the light transmitting layer 109 preferably has a thickness in a range from 10 µm to 177 µm. In this case, the light transmitting layer 109 is formed from an ultraviolet ray hardening resin or by a transparent flat plate such as polycarbonate or glass plate, which is arranged on the information recording layer 108 via a transparent adhesive layer.

As for the organic material used for the information recording layer 108, as has been described above, since the information recording layer 108 is formed by the spin coat method, those that can be dissolved in organic solvents are used. However, such an organic material that can be dissolved in an organic solvent is also dissolved with respect to the ultraviolet ray hardening resin and the transparent adhesive layer used when forming the light transmitting layer 109. For this, if the information recording layer 108 is dissolved by the ultraviolet ray hardening resin and the transparent adhesive layer, the function of the information recording layer 108 is damaged. Thus, the conventional write-once optical disc has a problem that the organic material is dissolved in the light transmitting layer 109 and cannot perform an accurate recording/reproducing.

Moreover, there is a case that an organic material that cannot be dissolved by alcohol. In this case, it should be dissolved in a solvent such as tetrahydrofuran. However, when a solvent such as tetrahydrofuran is used, the resin constituting the substrate 106 is dissolved when forming the information recording layer 108 by the spin coat method. This causes a problem that the guide groove formed on the substrate 106 is deformed.

### Summary of the Invention

It is therefore an object of the present invention to provide an optical recording medium in which even when an organic material is used as the recording material, no dissolving occurs between adjacent layers, and which can perform accurate recording/reproducing.

In order to achieve the aforementioned object, the optical recording medium according to the present invention includes a recording layer made from an organic material, a light transmitting layer, and a dielectric layer arranged between the light transmitting layer and the recording layer.

In the optical recording medium having the aforementioned configuration according to the present invention, the organic material contained in the recording layer is protected by the dielectric layer. Accordingly, in the optical recording medium according to the present invention, it is possible to prevent dissolving of the organic material or dissolving of a material constituting an adjacent layer into the recording layer.

### Brief Description of the Drawings

Fig. 1 is a cross sectional view of an essential portion of a conventional optical disc where a laser beam is applied from the substrate side.

Fig. 2 is a cross sectional view of an essential portion of a conventional optical disc having a light transmitting layer.

Fig. 3 is a cross sectional view of an essential portion of a write-once optical disc as an example of an optical recording medium according to the present invention.

Fig. 4 is a microscopic photograph of a surface of an optical disc A including a dielectric layer having a thickness of 10 nm.

Fig. 5 is a microscopic photograph of a surface of an optical disc B including a dielectric layer having a thickness of 50 nm.

Fig. 6 is a microscopic photograph of a surface of an optical disc C including a dielectric layer having a thickness of 100 nm.

Fig. 7 shows the relationship between the thickness of the organic film containing an organic material and the reflectance.

Fig. 8 shows a brief configuration of an experiment system for explaining the operation principle of the optical-oriented organic material.

Fig. 9 shows the relationship between the dielectric layer film thickness and the quantity of reflecting light.

Fig. 10 is a cross sectional view of an essential portion of a write-once optical disc shown as another optical recording medium according to the present invention.

### Detailed Description of Preferred Embodiments

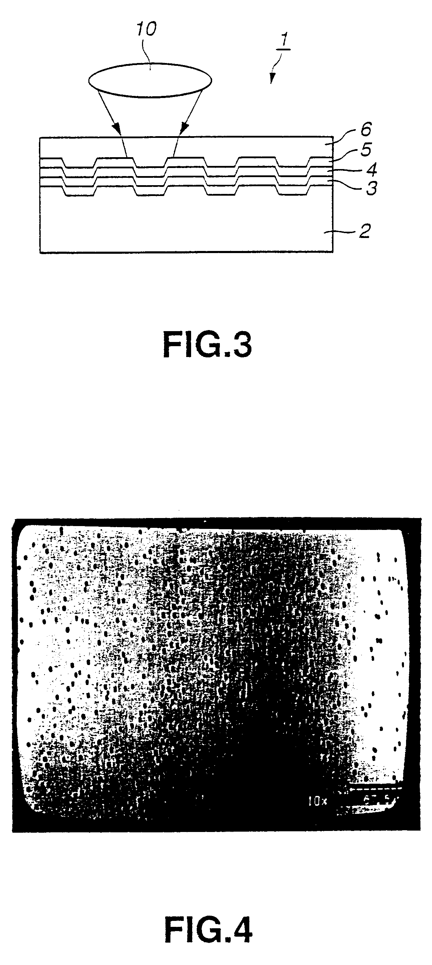

Description will now be directed to an optical recording medium according to a preferred embodiment of the present invention with reference to the attached drawings. Here, explanation will be given on a write-once optical disc 1 shown in Fig. 3 as the optical recording medium according to the present invention.

This write-once optical disc 1 includes a substrate 2 formed in a disc shape by injection molding of a synthetic resin such as polycarbonate on which a reflection layer 3, a recording layer 4, a dielectric layer 5, and a light transmitting layer 6 are successively formed. That is, the write-once optical disc 1 includes the reflection layer 3, the recording layer 4, the dielectric layer 5, and the light transmitting layer 6 which are successively formed in this order from the side of the substrate 2.

In this write-once optical disc 1, with an objective lens 10 is arranged at a position to oppose to the light transmitting layer 6, a laser beam having a predetermined wavelength is applied for recording of an information signal and reproducing of a recorded information signal. It should be noted that in this write-once optical disc 1, an information signal can be recorded only once in the recording layer 4. The information signal once written cannot be rewritten.

Firstly, explanation will be given on the substrate 2 and the reflection layer 3 of this write-once optical disc 1. The substrate 2 is prepared using a known resin material which is usually used for a substrate in the so-called optical disc. That is, the substrate 2 is formed by an injection molding processing a stamper prepared by a so-called master creation process. However, in the present embodiment, the substrate 2 need not have a light transmitting characteristic because the laser beam used for recording/reproducing need not transmit the substrate 2. Accordingly, the substrate 2 may be made not only from known resin materials used in the conventional optical disc but also resin materials not having the light transmitting characteristic. Thus, there is a wide range of selection for the resin material used for preparing the substrate 2. It is possible to select materials satisfying various factors such as mechanical characteristic, thermal characteristic, surface characteristic, transfer characteristic, and the like.

More specifically, the substrate 2 may be used from resin materials such as polycarbonate, methacrylic resin, acrylic resin, polyolefine resin, epoxy resin, and other plastic materials. For example, the substrate 2 is formed using polycarbonate with a thickness of 1.2 mm.

The substrate 2 has on its one surface a groove and/or a pit string formed by transfer of a convex-concave pattern formed on a stamper used in the injection molding process. The groove is formed in concentric circles or in a spiral shape to be used as a guide groove of the laser beam applied for recording/reproducing.

Moreover, the reflection layer 3 is formed on the surface of the substrate 2 having the groove and the pit string and is arranged so as to improve the reflectance of the laser beam applied from the side of the light transmitting layer 6 during recording/reproducing. The reflection layer 3 is formed as a thin film to cover the groove and/or the pit string. More specifically, the reflection layer 3 is made from a metal material such as Al, Au, and Ag. From the viewpoint of the reflection characteristic, it is preferable to use a material containing at least Al. Moreover, the reflection layer 3 is formed from the aforementioned materials using the ion beam sputter, magnetron sputter, or vacuum deposition. More specifically, the sputtering method is used to form an Ag film with a thickness of about 100 nm.

In this write-once optical disc 1, since a laser beam is applied from the side of the light transmitting layer 6 for recording/reproducing, the laser beam is applied onto the opposite surface of the reflection layer 3 not facing the substrate 2. That is, the surface of the reflection layer 3 serves as a reflection surface of the laser beam. When the reflection surface does not have a preferable surface characteristic, the laser beam may cause irregular reflection which is observed as a noise component. For this, the reflection layer 3 is preferably made from a material which exhibits an excellent surface characteristic after the film formation process.

Moreover, in the write-once optical disc 1, there is a tendency to use a laser beam having a short wavelength so as to obtain a high-density recording. For example, a laser beam having a wavelength of about 400 nm is now used. Accordingly, the reflection layer 3 is preferably made from a material exhibiting an excellent reflectance for the laser beam having a wavelength of about 400 nm.

As the material having an excellent surface characteristic after the film formation process and exhibiting an excellent reflectance for the laser beam of short wavelength, there can be exemplified an Ag, Ag alloy. Al alloy, and the like, and especially preferable to use Ag.

Next, explanation will be given on the recording layer 4. The recording layer 4 contains an organic material as the recording material. More specifically, the organic material may be cyanine-system or phthalocyanine-system organic pigment material. When forming this recording layer 4, the organic material as the recording material is firstly solved in a solvent such as alcohol to obtain a paint. The paint containing the organic material (hereinafter, referred to simply as a paint) is applied by the spin coating method or the like to form a film which is dried to obtain the recording layer 4 having a thickness of about 120 nm.

Here, the paint is directly applied onto the reflection film 3 or the substrate 2 and accordingly, it is preferable to use a solvent which will not corrode the reflection layer 3 or dissolve the substrate 2. More specifically, the solvent is preferably alcohol such as tetrafluoropropanol. Accordingly, the organic material is preferably selected from materials having an excellent solubility with respect to alcohol such as tetrafluoropropanol.

It should be noted that in the write-once optical disc 1, the organic material is an organic pigment material. However, in this invention, it is also possible to use as the organic material an organic light-orientation material in which molecular orientation is changed when subjected to a polarized light.

Next, explanation will be given on the dielectric layer 5 and the light transmitting layer 6. The dielectric layer 5 is formed, for example, using a material such as SiO₂, Si₃N₄, and AlN so as to cover the recording layer 4. For example, when forming the dielectric layer 5 from SiO₂, after the recording layer 4 is formed, a reactive sputtering is performed using Ar + O₂ gas mixture as the sputtering gas in a sputtering apparatus where a Si target or a SiO₂ target is arranged.

Moreover, the light transmitting layer 6 is formed by forming a paint film of a predetermined thickness from an ultraviolet ray hardening resin using the spin coating method and applying ultraviolet ray to the film. More specifically, the light transmitting layer 6 is formed by the spin coating method so as to have a film thickness of 10 µm to 177 µm after hardening. When the light transmitting layer 6 has a film thickness of 10 µm to 177 µm, it is possible to suppress the aberration of the recording/reproducing spot obtained by an optical system including an objective lens having NA not less than 0.78 for example as well as to suppress the deterioration of a reproduction signal due to the aberration.

It should be noted that in the write-once optical disc 1, the light transmitting layer 6 may also be prepared by using a polycarbonate substrate or a glass plate formed with a predetermined thickness which is layered via a transparent adhesive layer.

In the write-once optical disc 1 having the aforementioned configuration, the dielectric layer 5 is formed between the light transmitting layer 6 and the recording layer 4 and the light transmitting layer 6 is not in contact with the recording layer 4. If the light transmitting layer 6 is in contact with the recording layer 4, the organic pigment material contained in the recording layer 4 is dissolved into the ultraviolet ray hardening resin used for the light transmitting layer 6. However, in the write-once optical disc 1, the recording layer 4 is separated from the light transmitting layer 6 by the dielectric layer 5 and there is no danger of dissolving the organic pigment material of the recording layer 4.

Accordingly, in this write-once optical disc 1, the function of the recording layer 4 is not lowered or damaged and it is possible to accurately record an information signal. In other words, the write-once optical disc 1 including the dielectric layer 5 formed between the light transmitting layer 6 and the recording layer 4 enables to accurately record/reproduce an information signal, thereby enhancing the reliability.

Moreover, in the write-once optical disc 1, even when the light transmitting layer 6 is formed via a transparent adhesive layer, the transparent adhesive layer is formed on the dielectric layer 5 and not in contact with the recording layer 4. Accordingly, in this case also, there is no danger of dissolving of the organic pigment material contained in the recording layer 4 to lower the function of the recording layer 4.

On the other hand, the dielectric layer 5 preferably has a film thickness sufficient to prevent dissolving of the organic pigment material from the recording layer 4 into the light transmitting layer 6. More specifically, when forming the dielectric layer 5 from SiO₂ by the sputtering method, the dielectric layer 5 preferably has a film thickness not less than 100 nm. To verify this, a write-once optical disc was actually prepared as follows and dissolving of the organic pigment material in the recording layer 4 was checked by visual observation.

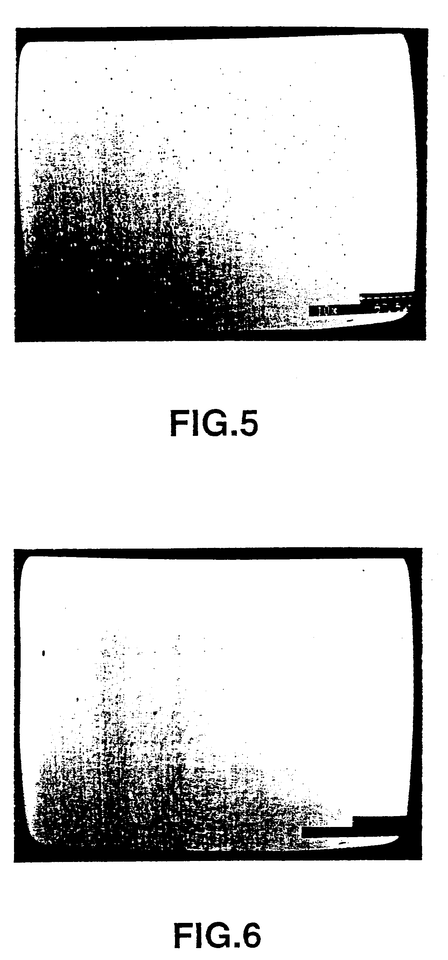

For verification, we prepared an optical disc A including the dielectric layer 5 with a thickness of 10 nm, an optical disc B including the dielectric layer 5 with a thickness of 50 nm, and an optical disc C including the dielectric layer 5 with a thickness of 100 nm. Fig. 4 shows a microscopic photograph of the optical disc A, Fig. 5 shows a microscopic photograph of the optical disc B, and Fig. 6 shows a microscopic photograph of the optical disc C. It should be noted that the microscopic photographs shown in Fig. 4 to Fig. 6 were obtained by photographic the optical disc surfaces from the side of the light transmitting layer 6.

In the microscopic photograph of Fig. 4, it is possible to observe in the optical disc A numerous black spots representing pin holes formed by dissolving out of the organic material from the recording layer 4 into the light transmitting layer 6. Moreover, in the microscopic photograph of Fig. 5, it is also possible to observe black spots representing pin holes in the optical disc B. However, in the microscopic photograph of Fig. 6, no black spots representing pin holes are observed in the optical disc C.

This shows that it is possible to assure prevention of the dissolving of the organic material from the recording layer 4 by increasing the thickness of the dielectric layer 5. Moreover, when the dielectric layer 5 is formed from SiO₂, it has been confirmed that prevention of dissolving of the organic material from the recording material can be assured by making the film thickness of the dielectric layer 100 nm.

Here, the microscopic photographs of Fig. 4 to Fig. 6 show examples of write-once optical disc having the dielectric layer 5 made from SiO₂. For this, in the present invention, Fig. 4 to Fig. 6 do not show that the thickness of the dielectric layer 5 not less than 100 nm is not indispensable condition. That is, the thickness required of the dielectric layer 5 differs depending on the material constituting the dielectric layer 5, the formation method of the dielectric layer 5, the material constituting the light transmitting layer 6, and the like.

On the other hand, in the aforementioned write-once optical disc 1, the reflection layer 3 is arranged on the substrate 2 so as to increase the reflectance of the laser beam applied from the side of the light transmitting layer 6 during recording/reproducing. However, the reflection layer 3 need not be arranged in the aforementioned write-once optical disc 1 when the recording layer 4 has a sufficiently high reflectance. That is, the write-once optical disc 1 may be constituted by the recording layer 4, the dielectric layer 5, and the light transmitting layer 6 which are successively layered on the substrate 2.

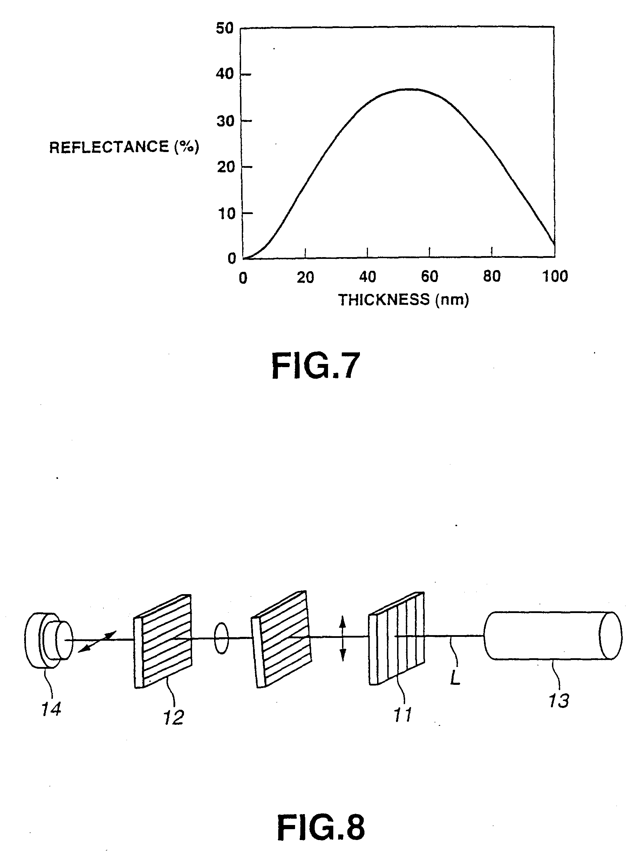

More specifically, it is possible to control the reflectance of the recording layer 4 by modifying the film thickness of the recording layer 4 containing the organic material and it is possible to obtain a write-once optical disc 1 having a desired reflectance without providing the reflection layer 3. For example, the relationship between the organic film thickness containing an organic material and the reflectance of the organic film shown in Fig. 7 shows that it is possible to control the reflectance of the organic film not less than 20 % by selecting an appropriate thickness of the organic film. It should be noted that Fig. 7 shows calculation results assuming that a laser beam having a wavelength of 650 nm is applied to an optical disc including an organic film whose both surfaces are sandwiched by a glass or polycarbonate having a refractive index 1.46 and assuming that the organic film has a refractive index 3.0 and an extinction coefficient 0.06. Accordingly, in a recording/reproducing system defined in such a way that the laser beam for recording/reproducing has a reflectance of about 20 %, it is possible to obtain a desired reflectance by the recording layer 4 containing an organic material and realize an accurate recording and reproducing without providing the reflection layer 3.

Moreover, in the write-once optical disc 1, since the organic material has a low thermal conductivity, the reflection layer 3 has almost no role of controlling the thermal characteristic of the recording layer 4. Accordingly, absence of the reflection film 3 does not cause any significant change in the recording characteristic. Furthermore, when the reflection layer 3 is not arranged, it is possible to reduce the number of production steps for producing the write-once optical disc 1, which in turn significantly reduces the production cost.

By the way, in the aforementioned write-once optical disc 1, by providing the dielectric layer 5 between the recording layer 4 and the light transmitting layer 6, it is possible to cause a multiple interference of the laser beam applied, thereby increasing a detection signal. The multiple interference of the laser beam applied is caused in the boundary between the light transmitting layer 6 and the dielectric layer 5 when the light transmitting layer 6 and the dielectric layer 5 have different refractive index values.

In order to verify the detection signal amplifying effect of the multiple interference, a rewritable optical disc was prepared using a light-orientation organic material as the organic material. In this rewritable optical disc, the recording layer 4 contains as the recording material a light-orientation organic material whose molecular orientation is changed when subjected to polarized light. Moreover, in this rewritable optical disc, the dielectric layer 5 is formed from Si₃N₄. Moreover, in this rewritable optical disc, the reflection layer 3 is made from Al with a thickness of 100 nm.

Here, the light-orientation organic material is a material in which molecules are oriented in the vertical direction to a linear polarization applied and the material after the orientation exhibits a great birefringence. The birefringence has a refraction index of 1.5 and 2.0 for the ordinary ray axis and the extraordinary ray axis, respectively. The extinction coefficient for these axes is 0.04. It should be noted that these optical constants may vary depending on the production method of the light orientation film.

When producing this rewritable optical disc, firstly, the substrate 2 is prepared with a thickness of 1.2 mm by the injection molding, and the reflection layer 3 is formed from Al on the substrate 2. The reflection layer 3 is formed in the DC magnetron sputtering apparatus. In this DC magnetron sputtering apparatus, the substrate 2 is set on a holder in such a manner that it can be rotated in a vacuum chamber. After the vacuum chamber is made vacuum, Ar gas is introduced at a flow rate of 100 sccm to obtain a gas pressure of 0.2 Pa in the vacuum chamber. In this state, an Al target is used for performing the DC magnetron sputtering with 1 kW power for 5 minutes, thereby forming the reflection layer 3 from Al with a thickness of 100 nm.

Next, the light-orientation organic material is dissolved in 2.2.3.3 - tetrafluoro - 1 - propanol so as to obtain a 30 g/l paint, which is used to form the recording layer 4 by the spin coat method. Here, the substrate having the reflection layer 3 is fixed on a turn table, which is rotated at 20 rpm while the paint is dipped onto the inner circumference of the substrate. After that, the turn table is rotated at 5000 rpm for 5 seconds. With this, it is possible to form a recording layer having a thickness of 120 nm on the reflection layer 3.

Next, the dielectric layer 5 is formed from Si₃N₄ on the recording layer 4. The dielectric layer 5 is formed in an RF magnetron sputtering apparatus. In this RF magnetron sputtering apparatus, the substrate 2 is retained set on a holder so that it can be properly rotated in a vacuum chamber. After the vacuum chamber is made vacuum, Ar gas is introduced at a flow rate of 180 sccm and N₂ gas is introduced at a flow rate of 40 sccm so as to obtain a gas pressure of 0.3 Pa in the vacuum chamber. In this state, a Si target is used to perform RF magnetron sputtering with 1 kW power for 13 minutes and 45 seconds, thereby forming the dielectric layer from Si₃N₄ with a thickness of 120 nm.

Next, a paint containing an ultraviolet ray hardening type resin to apply the paint with a predetermined thickness by the spin coat method. After that, an ultraviolet ray is applied to the paint to form the light transmitting layer 6 on the dielectric layer 5. Here, the spin coat method can be performed in the same way as when forming the aforementioned recording layer 4. Thus, it is possible to form the light transmitting layer 6 with a thickness of 100 µm on the dielectric layer 5. It should be noted that the light transmitting layer 6 can also be formed with a large film thickness by performing the spin coat method a plurality of times.

It should be noted that when arranging a second dielectric layer between the reflection layer 3 and the recording layer 4, the RF magnetron sputtering apparatus used when forming the dielectric layer 5 is used after forming the reflection layer 3 and before forming the recording layer 4. Here, the RF magnetron sputtering apparatus is used under the same condition as when forming the dielectric layer 5. However, the second dielectric layer may be thinner than the aforementioned dielectric layer 5 and the film formation time is set to 2 minutes and 30 seconds to obtain a film thickness of 20 nm.

Here, explanation will be given on an operation principle of the recording layer formed by using a light-orientation organic material with reference to an experiment system shown in Fig. 8 . In the experiment system shown in fig. 8, a light-orientation film 10 is arranged between a polarization plate 11 arranged with a relative angle of 90° and analyzer 12, so as to detect a transmitting light amount of the light-orientation film 10. The transmitting light amount is determined by measuring the laser L emitted from a He-Ne laser oscillator 13 using a detector 14. When the light-orientation film 10 is not oriented, the transmitting light amount of the laser L is 0. Moreover, when the light-orientation film 10 is oriented with inclination of 45 ° against the polarization plate 11, because of the birefringence of the light-orientation organic material, the detection light is observed with the laser L polarization plane rotated. Furthermore, when the light-orientation film 10 exhibits a birefringence equivalent to λ/2 against the laser wavelength, for example, 633 nm, the incident linear polarization is rotated by 90° theoretically and the maxim detection light amount is obtained. That is, when this state is applied to the rewritable optical disc, it is possible to obtain a maximum modulation factor.

However, in a rewritable optical disc, when the recording film 4 has a small film thickness or small birefringence, the phase change is smaller than λ/2 and accordingly, the modulation factor is reduced. In such a case, in the rewritable optical disc, the multiple interference by the dielectric layer 5 operates effectively. That is, a multiple interference is caused on the boundary between the dielectric layer 5 and the light transmitting layer 6, which can amplify the modulation factor in the rewritable optical disc.

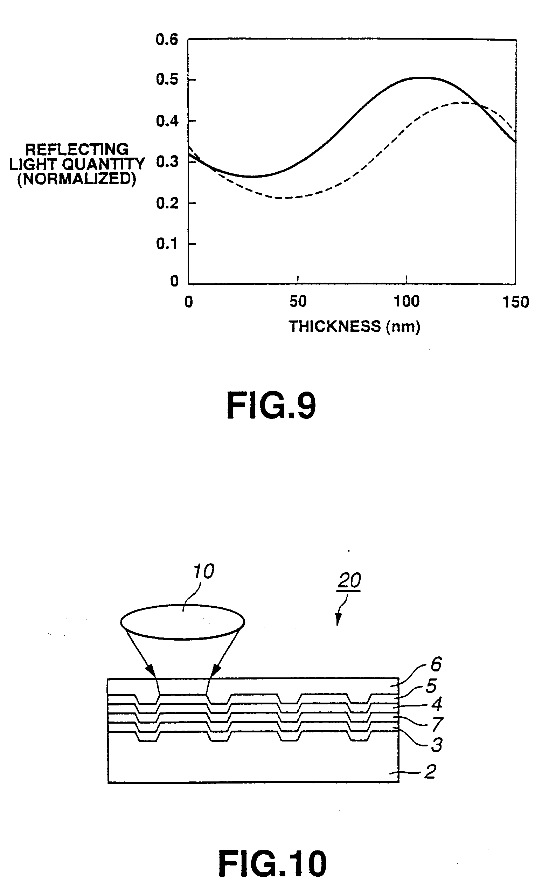

More specifically, an example is shown in an optical system of an actual optical disc. The optical disc includes a recording film and a reflection film and serves as an optical system equivalent to the one reflected by the disc in Fig. 8. That is, a beam splitter is arranged between the optical disc and the polarization plate. so that a reflected light is detected via a analyzer by a detector. Here, the reflection film is made from a material having a high reflectance such as Al (3 in Fig. 3). Fig. 9 shows the reflecting light quantity detected when the aforementioned optical system is provided with a laser having wavelength of 633 nm as a light source with respect to a disc including a light-orientation film having a film thickness of 120 nm and an Al film thickness of 100 nm. It should be noted that the horizontal axis represents the film thickness of the Si₃N₄ film (5 in Fig. 3) arranged adjacent to the recording film (4 in Fig. 3) and the vertical axis represents a reflection light from a disc having only an Al reflection film which light has been normalized by the light quantity detected with the analyzer rotated by 90°. Moreover, in Fig. 9, the solid line shows the configuration of Fig. 3 while the dashed line shows the case when a Si₃N₄ film (7 in Fig. 10) having a film thickness of 20 nm is further provided between the recording film and the reflection film.

As shown in Fig. 9, when the dielectric layer 5 is absent (contact point of solid line with the y axis in Fig. 9), the reflecting light quantity is about 0.33 but when the dielectric layer 5 is present (solid line in Fig. 9), there is apparently the effect of multiple interference. When the film thickness is about 125 nm, the reflecting light quantity reaches 0.45. This shows that in a rewritable optical disc, it is possible to obtain the effect to amplify a detection signal by providing the dielectric layer 5. Moreover, in the rewritable optical disc, by adjusting the film thickness of the dielectric layer 5, it is possible to significantly improve the signal amplitude. Furthermore, the dashed line in Fig. 9 shows a case when the dielectric film 7 is provided between the recording film and the reflection film.

It should be noted that these effects can also be obtained not only in a rewritable optical disc but also in the aforementioned write-once optical disc 1. When an organic pigment material is used in the recording layer 4, the refraction index of the organic pigment material is changed according to a recording state or unrecorded state, resulting in different optical path, which causes a light interference. By observing the modulation caused by diffraction, it is possible to reproduce a signal. This is because generation of the multiple interference enables to increase the effective optical path even when the refraction index change is small and as a result, the detection signal can be amplified.

It should be noted that in the experiment system shown in Fig. 8, the detection light intensity is obtained without focusing the laser L. However, the similar effect can also be obtained in the focusing optical system such as the aforementioned write-once optical disc and the rewritable optical disc. Moreover, the similar effect can be expected even when using a dielectric material other than Si₃N₄ for the dielectric layer 5. Furthermore, in this experiment system, the laser used for recording has a wavelength of 532 nm and the laser used for reproducing has a wavelength of 633 nm. However, the similar effect can be obtained by any wavelength of the laser. Moreover, it is also possible to perform recording and reproducing using a laser of the same wavelength. Furthermore, the optimal thickness of the dielectric layer 5 depends on the laser wavelength and it is preferable to set a thickness according to the laser wavelength to be used. By the way, the optical recording medium according to the present invention is not to be limited to an optical disc having the configuration of the aforementioned write-once optical disc and the rewritable optical disc. That is, the optical recording medium according to the present invention may be a write-once optical disc 20 including the dielectric layer 7 between the recording layer 4 and the reflection layer 3 as shown in Fig. 10.

That is, the write-once optical disc 20 includes the reflection layer 3, the dielectric layer 7, the recording layer 4, and the light transmitting layer 6 which are successively layered on the substrate 2. Here, the light-orientation organic material contained in the recording layer 4 normally cannot be dissolved in alcohol solvent. For this, in this case, the recording layer 4 is formed by spin-coating a paint prepared from an organic material solved in a solvent such as tetrahydrofuran.

The solvent such as tetrahydrofuran, when brought into contact with the reflection layer 3 and the substrate 2, may deteriorate the metal material of the reflection layer 3 or dissolve the substrate 2. When the metal material of the reflection layer 3 is deteriorated, it becomes impossible to obtain a desired reflectance, disabling to obtain a desired recording/reproducing characteristic. Moreover, when the substrate 2 is dissolved, the groove and the pit string formed on the substrate 2 are deformed and denatured, disabling to obtain an excellent recording/reproducing characteristic.

However, in this write-once optical disc 20, as the dielectric layer 7 is provided between the reflection layer 3 and the recording layer 4, the solvent of the reflection layer 3 such as tetrahydrofuran will not deteriorate the metal material of the reflection layer 3. Moreover, even when the reflection layer 3 is absent, the dielectric layer 7 can prevent dissolving of the substrate 2. For this, the write-once optical disc 20 can exhibit an excellent recording/reproducing characteristic.

Moreover, in this write-once optical disc 20 also, it is possible to obtain the effect of multiple interference by the dielectric layer 7 and accordingly, to significantly amplify a detection signal during reproducing. Furthermore, in this case, by adjusting the thickness of the dielectric layer 7, it is possible to further amplify the effect of the signal amplification as has been described above.

By the way, the present invention is not to be limited to an optical recording medium having the light transmitting layer 6 to which a laser beam is applied from the side of the light transmitting layer 6 for recording and reproducing. That is, the present invention can also be applied to an optical recording medium to which a laser beam is applied from the side of the substrate 2 during recording and reproducing. In this case also, in the same way as has been described above, the dielectric layer can prevent dissolving of the organic material contained in the recording layer as well as dissolving of the substrate.

As is clear from the aforementioned, in the optical recording medium according to the present invention, the organic material contained in the recording layer is protected by the dielectric layer. Accordingly, in the optical recording medium according to the present invention, it is possible to prevent dissolving of the organic material or dissolving of a material constituting a layer adjacent to the recording layer. For this, the optical recording medium according to the present invention can exhibit a high reliability and an excellent recording/reproducing characteristic.

## Claims

1. An optical recording medium comprising a recording layer made from an organic material, a dielectric layer, and a light transmitting layer which are successively layered on a substrate in which a recording/reproducing light is applied from the light transmitting layer.

2. The optical recording medium as claimed in Claim 1, the medium further comprising a reflection layer arranged between the substrate and the recording layer.

3. The optical recording medium as claimed in Claim 1, the medium further comprising a dielectric layer arranged between the substrate and the recording layer.

4. The optical recording medium as claimed in Claim 2, the medium further comprising a dielectric layer arranged between the reflection layer and the recording layer.

5. The optical recording medium as claimed in Claim 1, wherein the organic material is an organic pigment-system material.

6. The optical recording medium as claimed in Claim 1, wherein the organic material is an organic light-orientation material in which molecular orientation is changed when subjected to a polarized light.
